# EUROPEAN PATENT APPLICATION

(11) **EP 3 958 608 A1**
(43) Date of publication of application: **23.02.2022**
(21) Application number: 20861907.2
(22) Date of filing: 31.08.2020
(51) Int. Cl.: H04W 24/10

(54) **METHOD AND APPARATUS FOR REPORTING BUFFER STATUS REPORT, AND USER TERMINAL AND COMPUTER-READABLE STORAGE MEDIUM**

(30) Priority: 06.09.2019 CN 201910843236
(71) Applicant: ZTE Corporation, shenzhen Guangdong 518057 (CN)
(72) Inventor: JIANG, Bo, Shenzhen, Guangdong 518057 (CN); WEI, Yuzhen, Shenzhen, Guangdong 518057 (CN)
(74) Representative: Murgitroyd & Company
(86) International application number: PCT/CN2020/112586
(87) International publication number: WO 2021/043104

(57) **Abstract**

The present disclosure discloses a method and an apparatus for reporting a buffer status report, user equipment and a computer-readable storage medium. The method for reporting the buffer status report includes: determining, by user equipment, UE, logical channel groups, LCGs, with data to be transmitted, and a first number of LCGs assigned to send buffer sizes; and sending, by the UE, buffer sizes of the LCGs with data to be transmitted by means of a buffer status report, BSR, according to determined first number.

## Description

### CROSS REFERENCE TO RELATED APPLICATIONS

The present disclosure claims priority to Chinese Patent Application No. 201910843236.4, filed before China National Intellectual Property Administration on September 6, 2019, which is incorporated by reference herein in its entirety.

### TECHNICAL FIELD

The present disclosure relates to the field of mobile communication technology, such as a method and an apparatus for reporting a buffer status report, user equipment and a computer readable storage medium.

### BACKGROUND

During user equipment (UE) accesses a public land mobile network (PLMN) for a data transmission, the UE may inform a 5^{th} generation mobile communication system New Radio Nodeb (5G NR Nodeb, gNB) of the amount of data to be uploaded by the UE currently through a buffer status report (BSR), and the gNB may allocate corresponding uplink transmission resources to the UE according to the received BSR.

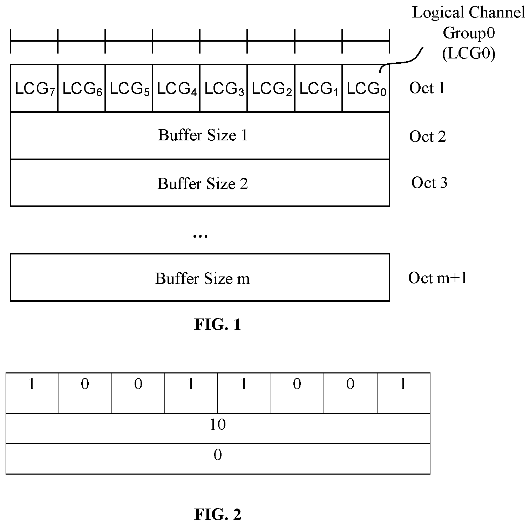

According to related protocols, methods for reporting the BSR defined in a New Radio (NR) roughly include: when a long truncated BSR is triggered, the BSR is reported in a descending order of priorities of multiple logical channel groups (LCG), and LCGs with the same priority are reported in an ascending order of LCG identifier (ID). The rules for writing in the long truncated BSR include: if LCGi is set to 1, the corresponding logical channel group has data to be transmitted, and if the LCGi is set to 0, the corresponding logical channel group has no data to be transmitted. At the same time, buffer sizes are sorted in an ascending order of the LCG identifier, i.e., sorted in the ascending order of i. In a BSR structure as shown in FIG. 1, oct 1/oct 2 in FIG. 1 indicates a length, and oct is an abbreviation for Octal number system, where each oct represents 8bit, that is, 1 byte in size.

In an example under an actual scenario, it is assumed that the LCGs include LCG7, LCG3, LCG4 and LCG0 in the descending order of priorities, LCG3 and LCG4 have a same priority, and the data volumes of the LCGs are 70, 30, 40, and 10 respectively. On one hand, according to relevant protocols, the UE is authorized to send buffer sizes of only two LCGs. In a report diagram as shown in FIG. 2, only the data volumes of LCG0 and LCG1 may be wrote according to the definition of the relevant protocols. In this way, the data volume information obtained by a network side is not comprehensive, and fails to reflect the order of priorities. That is to say, after obtaining such a BSR, the network side cannot give priority to allocating resources to the LCG with a high priority, and it is also impossible to allocate resources correctly. For example, in this example, only the data volumes of LCG0 and LCG1 are obtained, but the data volumes of LCG7 and LCG3 with the highest priority cannot be obtained. On the other hand, LCG1 actually has no data to be sent, but it occupies radio resources, thereby causing a waste of radio resources.

### SUMMARY

The present disclosure provides a method and an apparatus for reporting a buffer status report, user equipment, and a computer-readable storage medium, which can avoid a waste of radio resources.

The present disclosure provides a method for reporting the buffer status report, including:
- determining, by user equipment (UE), logical channel groups (LCGs) with data to be transmitted, and a first number of LCGs assigned to send buffer sizes; and
- sending, by the UE, buffer sizes of the LCGs with data to be transmitted by means of the buffer status report (BSR) according to determined first number.

The present disclosure also provides a computer-readable storage medium, storing a computer-executable instruction configured to perform the method for reporting the BSR.

The present disclosure further provides an apparatus for reporting the BSR, including a processor and a memory; where the memory stores a computer program, the computer program is configured to be run by the processor and to perform the method for reporting the BSR.

The present disclosure further provides user equipment, including the apparatus for reporting the BSR.

### BRIEF DESCRIPTION OF THE DRAWINGS

FIG. 1 is a schematic diagram of a structure of a long truncated buffer status report (BSR) in related technologies;
FIG. 2 is a schematic diagram of reporting a BSR in related technologies;
FIG. 3 is a flowchart of a method for reporting a BSR according to the present disclosure;
FIG. 4 is a schematic diagram of an embodiment of reporting a BSR according to the present disclosure;
FIG. 5 is a schematic diagram of another embodiment of reporting a BSR according to the present disclosure.

### DETAILED DESCRIPTION

In a configuration of the present disclosure, a computing device includes one or more central processing units (CPU), input/output interfaces, network interfaces, and memories.

The memory may include a non-permanent memory, a random access memory (RAM) and/or a non-volatile memory or the like of computer readable mediums, such as a read-only memory (ROM) or a flash RAM. The memory is an example of computer readable mediums.

Computer-readable mediums include a permanent and non-permanent, removable and nonremovable media, and information storage therein may be realized by any method or technology. The information may be a computer-readable instruction, a data structure, a program module, or other data. Examples of computer storage mediums include, but are not limited to, a phase-change RAM (PRAM), a static RAM (SRAM), a dynamic RAM (DRAM), and other types of RAM, ROM, electrically erasable programmable read-only memory (EEPROM), a flash memory or other memory technology, a read-only compact Disc-ROM (CD-ROM), a digital versatile disc (DVD) or other optical storage, magnetic cassette tape, magnetic tape disk storage or other magnetic storage devices or any other nontransmission mediums, which may be configured to store information that may be accessed by computing devices. According to the definition in this text, computer-readable mediums do not include a non-transitory computer-readable media, such as a modulated data signal and a carrier wave.

Hereinafter, embodiments of the present disclosure will be described with reference to the accompanying drawings.

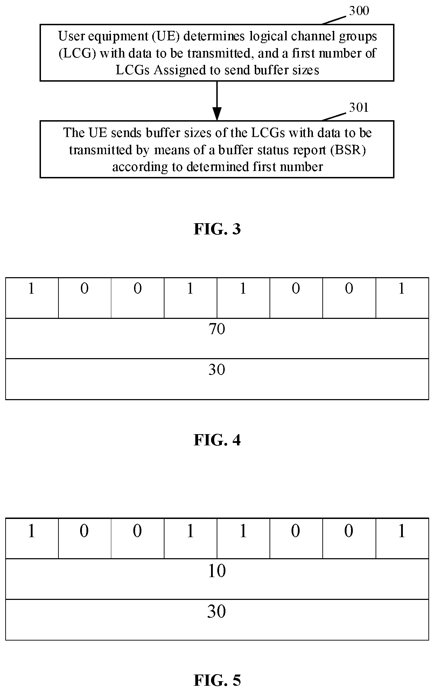

FIG. 3 is a flowchart of a method for reporting the BSR according to the present disclosure. As shown in FIG. 3, the method includes the following steps.

In step 300, user equipment (UE) determines logical channel groups (LCGs) with data to be transmitted, and determines a first number of LCGs assigned to send buffer sizes.

In an illustrative example, this step may include the following processes.

The LCGs with data to be transmitted is determined, and a number of the buffer sizes to be reported, i.e. a first number N of LCGs assigned to send the buffer sizes is determined according to an authorization number. For example, according to relevant protocols, the UE is authorized to send the buffer sizes of only two LCGs, that is, the first number N=2.

The BSR as shown in FIG. 1 is constructed, flag bits of the LCGs with data to be transmitted are set to a first flag, such as 1, which means that these LCGs have data to be buffered; flag bits of the LCGs without data to be transmitted are set to a second flag, such as 0, which means that there is no data to be buffered.

In an illustrative example, this step may include the following processes.

The LCGs with data to be transmitted and priority levels of the LCGs are determined, and a number of buffer sizes to be reported, i.e. a first number of the buffer sizes to be sent (which is N) is determined according to an authorized number. For example, according to the relevant protocols, the UE is authorized to send only the buffer sizes of two LCGs, that is, N=2.

The BSR as shown in FIG. 1 is constructed, flag bits of the LCGs with data to be transmitted are set to 1, which means that these LCGs have data to be buffered; flag bits of the LCGs without data to be transmitted are set to 0, which means that there is no data to be buffered.

In step 301, the UE sends buffer sizes of the LCGs with data to be transmitted by means of the BSR according to the determined first number.

In an illustrative example, this step may include the following processes.

The buffer sizes corresponding to the first number of LCGs with data to be transmitted are wrote, in the BSR as shown in FIG. 1, in an ascending or descending or random order of a serial number i of a LCG with data to be transmitted. That is, the buffer sizes of the first number of LCGs with data to be transmitted are wrote.

In this implementation, the LCGs corresponding to the buffer sizes wrote in the BSR by the UE always have data to be transmitted, thereby avoiding a waste of radio resources.

After receiving the BSR by a network side, the flag bit of the LCGi being set to 1 indicates that there is data to be transmitted, and the flag bit of the LCGi being set to 0 indicates that there is no data to be transmitted; the number of the buffer sizes reported and the number of the LCGi whose flag bit is set to 1 do not necessarily correspond one-to-one. However, since the LCGs corresponding to the buffer sizes wrote in the BSR by the UE always have data to be transmitted, the network side can always extract valid data information and allocate resources to the UE accordingly.

In an illustrative example, this step may include the following processes.

The top first number of LCGs are selected in a descending order of the priorities of the LCGs. In an illustrative example, when the priorities of the LCGs are the same, the one with a smaller LCG ID is preferentially selected.

In the BSR as shown in FIG. 1, the buffer sizes corresponding to the LCGs are wrote in the order of the selected first number of LCGs, that is, the buffer sizes of the selected first number of LCGs with data to be transmitted are wrote.

In this implementation, the LCGs corresponding to the buffer sizes wrote in the BSR by the UE always have data to be transmitted, and the LCGs corresponding to the wrote buffer sizes are LCGs with high priority levels, therefore not only the waste of radio resources can be avoided, but also the reporting of the data volume of the LCGs with high priorities can be ensured preferentially.

After receiving the BSR by the network side, the flag bit of LCGi being set to 1 indicates that there is data to be transmitted, and the flag bit of LCGi being set to 0 indicates that there is no data to be transmitted; the number of the buffer sizes reported and the number of the LCGi whose flag bit is set to 1 do not necessarily correspond one-to-one. However, since the LCGs corresponding to the buffer sizes wrote in the BSR by the UE always have data to be transmitted, the network side can always extract valid data information. In addition, the LCGs corresponding to the wrote buffer sizes are LCGs with high priority levels, and the network side can allocate resources to the UE accordingly.

Some embodiments of the present disclosure also provide a computer-readable storage medium, storing computer-executable instructions configured to perform the method for reporting the BSR.

Some embodiments of the present disclosure also provide an apparatus for reporting the BSR, including a processor and a memory; where the memory stores a computer program, the computer program is configured to be run by the processor and to perform the method for reporting the BSR.

Some embodiments of the present disclosure also provide user equipment, including the apparatus for reporting the BSR.

The present disclosure will be described below in conjunction with specific embodiments.

In the embodiments of the present disclosure, it is assumed that the UE has multiple LCGs with data, in a descending order of priorities, including: LCG7, LCG3, LCG4 and LCG0, where LCG3 and LCG4 have a same priority level; the data volume of LCG7, LCG3, LCG4 and LCG0 are 70, 30, 40, and 10 respectively. It is assumed that the UE is authorized to send the buffer sizes of only 2 LCGs.

In a first embodiment, firstly, it is determined that the LCGs with data to be transmitted are sorted in a descending order of priorities by: LCG7, LCG3, LCG4 and LCG0, the number of the buffer sizes that are authorized to report currently is 2, that is, the first number N=2. Then, according to the priority levels of the LCGs, it is determined that the top two LCGs with data to be transmitted are : LCG7, LCG3; LCG3 and LCG4 have the same priority level, thus the LCG with a smaller ID number is selected, namely LCG3. Next, as shown in FIG. 4, it can be known, from a schematic diagram of the first embodiment of the present disclosure for reporting the BSR as shown in FIG. 4, that the flag bits of LCG7, LCG3, LCG4 and LCG0 are set to 1, and the flag bits of the remaining LCGs are set to 0. The buffer sizes, i.e., the data volume of LCG7 valued 70 and the data volume of LCG3 valued 30 are wrote.

The network side may be informed, according to the BSR reported by the UE, that: there is data to be transmitted on LCG0, LCG3, LCG4 and LCG7, and there is no data to be transmitted on the remaining LCGs; and the transmission data volumes of LCG7 and LCG3 with high priorities are 70 and 30, respectively.

In the second embodiment, firstly, it is determined that the LCGs with data to be transmitted include: LCG0, LCG3, LCG4 and LCG7, and the number of the buffer sizes that are authorized to report currently is 2, that is, the first number N=2. Then, as shown in FIG. 5, it can be known, from a schematic diagram of the second embodiment of the present disclosure for reporting the BSR as shown in FIG. 5, that the flag bits of LCG0, LCG3, LCG4 and LCG7 are set to 1, and the flag bits of the remaining LCGs are set to 0. Next, the buffer sizes are wrote. In the second embodiment, the buffer sizes, i.e., the data volume of LCG0 valued 10 and the data volume of LCG3 valued 30 are wrote in an ascending order of the serial numbers i of the LCGs.

The network side may be informed, according to the BSR reported by the UE, that: there is data to be transmitted on LCG0, LCG3, LCG4 and LCG7, and there is no data to be transmitted on the remaining LCGs; and the transmission data volume of LCG0 and LCG3 are 10 and 30, respectively.

The drawings provided in the embodiments of the present disclosure only illustrate the basic idea of the present disclosure in a schematic manner. These blocks that may be referred to as a unit, an apparatus, or a module herein are physically implemented through an analog and/or digital circuit, such as a logic gate, an integrated circuit, a microprocessor, a microcontroller, a memory circuit, a passive electronic component, an active electronic component, an optical component, a hard-wired circuit, and the like, and may optionally be driven by firmware and/or software. These circuits may, for example, be embedded in one or more semiconductor chips, or on a substrate support such as a printed circuit board. The circuits constituting the block may be implemented by dedicated hardware or by a processor (for example, one or more programmed microprocessors and associated circuits) or by a combination of dedicated hardware to perform some functions of the block, and the processor may perform other functions of the block. Without departing from the scope of the concept of the present disclosure, each block of the embodiments may be physically divided into two or more interacting and separated blocks. Similarly, without departing from the scope of the concept of the present disclosure, the blocks of the embodiments may be physically combined into more complex blocks.

## Claims

1. A method for reporting a buffer status report, comprising:
determining, by user equipment, UE, logical channel groups, LCGs, with data to be transmitted, and a first number of LCGs assigned to send buffer sizes; and
sending, by the UE, buffer sizes of the LCGs with data to be transmitted by means of a buffer status report, BSR, according to determined first number.

2. The method according to claim 1, wherein determining the LCGs with data to be transmitted and the first number of LCGs assigned to send the buffer size comprises:
determining the LCGs with data to be transmitted, and taking an authorized number of LCGs assigned to send the buffer size as the first number;
after determining the first number of LCGs assigned to send the buffer size, the method further comprises:
constructing the BSR, and in the BSR, setting a flag bit corresponding to the LCG with data to be transmitted to a first flag, and setting a flag bit corresponding to LCG without data to be transmitted to a second flag.

3. The method according to claim 2, wherein sending the buffer sizes of the LCGs with data to be transmitted by means of the BSR according to the determined first number comprises:
sorting determined LCGs with data to be transmitted in an ascending, descending or random order of serial numbers of the determined LCGs with data to be transmitted, and selecting top first number of LCGs in a sorting result; and
writing the buffer sizes corresponding to the first number of LCGs, respectively, in the BSR.

4. The method according to claim 1, wherein determining the LCGs with data to be transmitted and the first number of LCGs assigned to send the buffer size comprises:
determining the LCGs with data to be transmitted and a priority level of each of the LCGs with data to be transmitted, and taking an authorized number of LCGs assigned to send the buffer size as the first number;
after determining the first number of LCGs assigned to send the buffer size, the method further comprises:
constructing the BSR, and in the BSR, setting a flag bit corresponding to the LCG with data to be transmitted to a first flag, and setting a flag bit corresponding to LCG without data to be transmitted to a second flag.

5. The method according to claim 4, wherein sending the buffer sizes of the LCGs with data to be transmitted by means of the BSR according to the determined first number comprises:
sorting determined LCGs with data to be transmitted in a descending order according to priorities of the determined LCGs with data to be transmitted, and selecting top first number of LCGs in a sorting result; and
writing the buffer sizes corresponding to the first number of LCGs in the BSR, respectively, in an order of selected first number of LCGs.

6. The method according to claim 5, wherein sorting the determined LCGs with data to be transmitted in the descending order according to the priorities of the determined LCGs with data to be transmitted comprises:
in response to that there are multiple LCGs with data to be transmitted having a same priority, sorting the multiple LCGs with data to be transmitted having the same priority in an ascending order of serial numbers of the multiple LCGs.

7. The method according to any one of claims 1 to 6, wherein the first number is two.

8. A computer-readable storage medium, storing computer-executable instructions configured to perform the method for reporting the buffer status report according to any one of claims 1-7.

9. An apparatus for reporting a buffer status report, comprising a processor and a memory; wherein the memory stores a computer program, the computer program is configured to be run by the processor and to perform the method for reporting the buffer status report according to any one of claims 1-7.

10. A user equipment, comprising the apparatus for reporting the buffer status report according to claim 9.
